# EUROPEAN PATENT SPECIFICATION

(11) **EP 3 923 736 B1**
(45) Date of publication and mention of the grant of the patent: **10.05.2023**
(21) Application number: 20700936.6
(22) Date of filing: 22.01.2020
(51) Int. Cl.: A23F 3/16, A23F 3/40, A23L 27/20

(54) **PRESERVED BLACK TEA BEVERAGE PRODUCT**
KONSERVIERTES SCHWARZTEEGETRÄNKEPRODUKT
PRODUIT CONSERVÉ POUR BOISSON AU THÉ NOIR

(30) Priority: 14.02.2019 EP 19157111
(43) Date of publication of application: 22.12.2021
(73) Proprietor: Unilever IP Holdings B.V., 3013 AL Rotterdam (NL)
(72) Inventor: MYCOCK, Gary, Sharnbrook Bedford Bedfordshire MK44 1LQ (GB); SIMONS, Elizabeth-Ann, Sharnbrook Bedford Bedfordshire MK44 1LQ (GB)
(74) Representative: Warner, Guy Jonathan
(86) International application number: PCT/EP2020/051532
(87) International publication number: WO 2020/164875

(56) References cited:
- WO-A1-01/87095
- US-A1- 2007 160 737
- R Rivola ET AL: "Non conventional antimicrobial substances in tea-based soft-drinks", Industrie delle Bevande, 1 January 2000 (2000-01-01), pages 129-136, XP055606956, Retrieved from the Internet: URL:https://www.cabdirect.org/cabdirect/ab stract/20001416134 [retrieved on 2019-07-18]
- ZHENG-ZHU ZHANG ET AL: "Antifungal Activities of Major Tea Leaf Volatile Constituents toward Colletorichum camelliae Massea", JOURNAL OF AGRICULTURAL AND FOOD CHEMISTRY, vol. 54, no. 11, 1 May 2006 (2006-05-01), pages 3936-3940, XP055052653, ISSN: 0021-8561, DOI: 10.1021/jf060017m
- SOICHIRO NAKAMURA ET AL: "Green-Leaf-Derived C6-Aroma Compounds with Potent Antibacterial Action That Act on Both Gram-Negative and Gram-Positive Bacteria", JOURNAL OF AGRICULTURAL AND FOOD CHEMISTRY, vol. 50, no. 26, 1 December 2002 (2002-12-01), pages 7639-7644, XP055385076, US ISSN: 0021-8561, DOI: 10.1021/jf025808c
- N. BELLETTI ET AL: "Antimicrobial Activity of Aroma Compounds against Saccharomyces cerevisiae and Improvement of Microbiological Stability of Soft Drinks as Assessed by Logistic Regression", APPLIED AND ENVIRONMENTAL MICROBIOLOGY, vol. 73, no. 17, 6 July 2007 (2007-07-06), pages 5580-5586, XP055252151, US ISSN: 0099-2240, DOI: 10.1128/AEM.00351-07
- WANG BING ET AL: "Essential oils and ethanol extract fromCamellia nitidissimaand evaluation of their biological activity", JOURNAL OF FOOD SCIENCE AND TECHNOLOGY, SPRINGER (INDIA) PRIVATE LTD, INDIA, vol. 55, no. 12, 6 October 2018 (2018-10-06), pages 5075-5081, XP036634245, ISSN: 0022-1155, DOI: 10.1007/S13197-018-3446-X [retrieved on 2018-10-06]

## Description

### Field of the invention

The present invention relates to a black tea product comprising a preservative composition, and especially to such products which are either ready-to-drink beverages or beverage concentrates.

### Background of the invention

Spoilage caused by a variety of microorganisms is one reason for food wastage. Spoilage is the process by which food deteriorates such that its edibility becomes reduced, ultimately resulting in the food becoming inedible to humans.

Moulds and/or yeasts growing on or within the food matrix may be responsible for food spoilage. Bacteria can also be responsible for food spoilage. Acids and metabolites are typically created in the processes by which bacteria break down food - even if the bacteria themselves are not harmful, the waste products may be unpleasant to taste or may even be harmful to health.

Consumers increasingly want convenience food to stay fresh and have a prolonged shelf life. Addition of preservatives to foodstuffs (such as beverages, spreads, dressings, convenience food, and so forth) is common practice in the food industry. The market for preservatives is growing in line with consumer demand.

Many countries have regulations that prohibit the use of certain food additives, including some preservatives, in foods and beverages. Although such regulations can vary widely, there is a clear trend for foods to contain fewer and lower levels of chemical preservatives, particularly synthetic ones.

R Rivola et al, Industrie delle Bevande, 1 January 2000 (2000-01-01), pages 129-136 is entitled "Non conventional antimicrobial substances in tea-based soft-drinks". Zheng-Zhu Zhang et al, Journal of Agricultural and Food Chemistry, vol. 54, no. 11, 1 May 2006, pages 3936-3940 is entitled "Antifungal Activities of Major Tea Leaf Volatile Constituents toward Colletorichum camelliae Massea".

Frequently used preservatives in beverage products include sorbates and benzoates. Unfortunately, the use of such preservatives can often impair the flavour of certain beverages. Furthermore, some consumers view these preservatives as the sort of chemical additives they would rather avoid. Indeed, there is a growing consumer trend for so-called "clean label" food products.

However, it is difficult to replace existing preservatives with "clean label" alternatives. In particular the replacement of sorbates is challenging, since many of the "natural" alternatives do not have a sufficient degree of anti-fungal activity.

Accordingly, there is a need for a "clean label" preservative which would provide the beneficial qualities of sorbates, particularly in terms of anti-fungal activity. Similarly, the formulation of beverages that have low levels of synthetic preservatives would also be desirable.

### Summary of the invention

The inventors have found that certain volatile aroma compounds are effective at preventing the proliferation of food spoilage microorganisms, particularly fungi such as moulds and yeasts - which are known to be common spoilage microorganisms in some beverage products.

In a first aspect, the present invention relates to a black tea product comprising a preservative composition, wherein the black tea product is a ready-to-drink beverage or a beverage concentrate, wherein the black tea product comprises less than 60 ppm linalool, and wherein the preservative composition comprises at least 3 compounds, preferably at least 4 compounds, more preferably at least 5 compounds, selected from: hexanal, E-2-hexenal, E-2-hexenol, E-linalool oxide, methanol and methyl salicylate. Preferably, the preservative composition comprises E-2-hexenal and at least 2 compounds, more preferably at least 3 compounds, still more preferably at least 4 compounds, selected from: hexanal, E-2-hexenol, E-linalool oxide, methanol and methyl salicylate.

In a second aspect, the invention provides a method for preparing a preserved black tea product, the method comprising adding a preservative composition to a black tea product, wherein the black tea product is a ready-to-drink beverage or a beverage concentrate, wherein the black tea product comprises less than 60 ppm linalool, and wherein the preservative composition comprises at least 3 compounds, preferably at least 4 compounds, more preferably at least 5 compounds, selected from: hexanal, E-2-hexenal, E-2-hexenol, E-linalool oxide, methanol and methyl salicylate.

### Detailed description of the invention

In a first aspect, the present invention relates to a black tea product comprising a preservative composition, wherein the black tea product is a ready-to-drink beverage or a beverage concentrate.

As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of: withering, maceration, fermentation and drying. A more detailed description of the production of black tea can be found in Chapter 14 of "Tea: Cultivation to consumption" (edited by K.C. Wilson & M.N. Clifford, published in 1992).

The black tea product will contain tea solids. As used herein the term "tea solids" refers to dry material obtainable from the leaves of the plant *Camellia sinensis* var. *sinensis* and/or *Camellia sinensis* var. *assamica.* The tea solids can be provided by any suitable source, e.g. a tea extract (preferably in a powder format), a pressed tea juice, *etc.* The skilled person knows how to obtain such source materials. Since the tea product is a black tea product, the tea solids will be black tea solids (i.e. the tea solids will be dry material obtainable from substantially fermented tea).

Tea is known to have certain antimicrobial properties in itself, however this property (i.e. suppression of the growth of yeasts and moulds) is only evident once the concentration of tea solids exceeds 3%. At concentrations lower than this, which are typical for tea-based beverages (including tea concentrates), the tea acts as a nutrient that enhances the potential for microbial spoilage. The beverage preferably comprises 0.01% to 3% tea solids by weight of the beverage, more preferably 0.05% to 3%, most preferably 0.1 % to 2%.

As used herein the term "beverage" refers to a substantially aqueous composition. The beverage may be in any format. For example, it may be in a ready-to-drink format or a concentrated format. A "ready-to-drink beverage" refers to a drinkable composition suitable for direct human consumption, and preferably comprises at least 85% water by weight, more preferably at least 90%, and most preferably at least 95%. A "beverage concentrate" refers to a beverage composition which typically requires dilution with an aqueous liquid (such as, e.g. water, carbonated water or milk) prior to consumption, as such this format will typically have a higher solids content (and thus a lower water content) than a ready-to-drink format. For example, prior to dilution a beverage concentrate preferably comprises at 25 to 85% water by weight, more preferably 40% to 80%, and most preferably 50% to 75%.

The black tea product comprises a preservative composition, wherein the preservative composition comprises at least 3 compounds, preferably at least 4 compounds, more preferably at least 5 compounds selected from: hexanal, E-2-hexenal, E-2-hexenol, E-linalool oxide, methanol and methyl salicylate. It is also possible for the preservative composition to comprise all 6 of hexanal, E-2-hexenal, E-2-hexenol, E-linalool oxide, methanol and methyl salicylate.

Without wishing to be bound by theory, the inventors believe that tea product containing very low concentrations of the preservative composition may be prone to microbial spoilage at an earlier time point. Therefore, in order to provide a product with an extended shelf life the total concentration of hexanal and E-2-hexenal and E-2-hexenol and E-linalool oxide and methanol and methyl salicylate in the black tea product is preferably at least 10 ppm, more preferably at least 35 ppm, still more preferably at least 60 ppm and most preferably at least 75 ppm.

A successful preservative composition inhibits spoilage microorganisms without interfering with the sensorial properties of the black tea product. Without wishing to be bound by theory, the inventors believe that high concentrations of one or more of the volatile compounds in the preservative composition may impact the organoleptic properties of the tea product (e.g. by introducing unwanted flavour notes). Therefore, the total concentration of hexanal and E-2-hexenal and E-2-hexenol and E-linalool oxide and methanol and methyl salicylate in the black tea product is preferably no more than 5000 ppm, more preferably no more than 3000 ppm, most preferably no more than 1500 ppm.

The present inventors have found that high concentrations of linalool tend to limit the effectiveness of the preservative composition, therefore the black tea product comprises less than 60 ppm linalool, more preferably less than 30 ppm linalool, and still more preferably less than 15 ppm linalool. It is particularly preferred that the preserved black tea beverage is substantially free of linalool.

It is preferred that the black tea product of the present invention has an acidic pH (i.e. a pH of less than 7). For example, the product may have a pH (at 20°C) of 2 to 6. In particular the pH (at 20°C) is preferably no more than 5, more preferably no more than 4.5 and most preferably from 2 to 4.

In order to achieve an acidic pH, the preserved black tea beverage preferably comprises one or more acidulant. Suitable acidulants include organic acids such as citric acid, malic acid, lactic acid, tartaric acid, ascorbic acid, phosphoric acid, and salts thereof. Mixtures of one or more of these acidulants are also suitable. A particularly well-balance flavour may be provided when the acidulant comprises citric acid and/or a salt thereof. Mixtures of citric acid (and/or its salt), malic acid (and/or its salt), and ascorbic acid (and/or its salt) also provide good flavour. Typically, the concentration of the acidulant in the beverage will be from 0.001 to 1% by weight, more preferably from 0.01 to 0.5% by weight.

In designing beverages which are protected against spoilage, some of the more commonly used preservatives are sorbates. As used herein the term "sorbates" includes sorbic acid (E200) and salts thereof - including sodium sorbate (E201), potassium sorbate (E202), and calcium sorbate (E203). Sorbates are particularly effective anti-fungal agents, and finding "natural" replacements has been a challenge. We have found that the preservative composition of the present invention can be used to fully or partially replace sorbates in a beverage product. For example, such a preservative composition may allow the use of reduced levels of sorbates in a ready-to-drink beverage or a beverage concentrate (while still achieving the same anti-spoilage effect as the conventional full dose of sorbates). A typical amount of potassium sorbate in beverage products is from 250 ppm to 1000 ppm. Thus, the black tea product according to the present invention preferably comprises less than 200 ppm sorbates, more preferably less than 100 ppm sorbates, still more preferably less than 50 ppm sorbates, and most preferably less than 10 ppm sorbates.

Benzoates represent another class of commonly used preservatives, particularly in acidic foods such as soft drinks. We have found that the preservative composition of the present invention can be used to fully or partially replace benzoates in a beverage product. For example, the preservative composition may allow the use of reduced levels of benzoates in a ready-to-drink beverage or a beverage concentrate (while still achieving the same anti-spoilage effect as the conventional full dose of sorbates). As used herein the term "benzoates" includes benzoic acid (E210) and salts thereof - including sodium benzoate (E211), potassium benzoate (E212), and calcium benzoate (E213). A typical amount of sodium benzoates in beverages is from 150 ppm to 1000 ppm. Thus, the black tea product according to the present invention preferably comprises less than 500 ppm benzoates, more preferably less than 100 ppm benzoates, still more preferably less than 50 ppm benzoates, and most preferably less than 10 ppm benzoates.

It is particularly preferred that the black tea product is a flavoured beverage, more preferably a fruit-flavoured beverage, and most preferably a fruit-flavoured black tea beverage. Suitable flavours include natural or synthetic fruit flavours, and/or natural or synthetic herb flavours. Examples of fruit flavours include: apple, apricot, blackcurrant, cherry, cranberry, grape, grapefruit, guava, kiwi, lemon, lime, lychee, mandarin, mango, nectarine, orange, peach, pear, pineapple, plum, passion fruit, raspberry, and strawberry. Examples of herb flavours include: chamomile, chrysanthemum, elderflower, hawthorn, hibiscus, jasmine, mate, mint (e.g. peppermint, spearmint), osmanthus, rose, and verbena (e.g. lemon verbena).

Consumers prefer beverages with a sweet taste. Therefore, the tea product preferably comprises nutritive sweetener, non-nutritive sweetener, or mixtures thereof.

Non-nutritive sweeteners allow beverages to be formulated that have a low energy content, and yet still taste pleasantly sweet. Health-conscious consumers often prefer such beverages. Preferred examples of non-nutritive sweeteners include aspartame, saccharin, acesulfame K, glycyrrhizin, stevia-derived sweetening agents (for example: stevioside, rebaudioside A, rebaudioside C, ducloside A; preferred examples being stevioside and/or rebaudioside), sucralose, and mixtures thereof. Owing to their well-rounded flavour, the most preferred non-nutritive sweeteners are acesulfame K, aspartame, sucralose, rebaudioside A, or mixtures thereof. The concentration of non-nutritive sweetener will depend on the relative sweetness of the sweetener, and the composition of the beverage. Typically, the black tea product will comprise non-nutritive sweetener in an amount of 0.00001 to 10% by weight of the beverage, more preferably 0.001 to 1% by weight and most preferably 0.01 to 0.1% by weight.

On the other hand, consumers may prefer the perceived naturalness of nutritive sweeteners. Examples of nutritive sweeteners include glucose, sucrose, fructose, and mixtures thereof. A particularly preferred example of a natural nutritive sweetener is honey.

The black tea product may have a high calorie content (e.g. have an energy content of more than 100 kCal per 100 g of the beverage, preferably between 150 and 1000 kCal). Such products preferably comprise one or more nutritive sweetener(s), optionally in combination with one or more non-nutritive sweetener(s).

In one preferred embodiment, the black tea product is a low-calorie beverage (e.g. having an energy content of less than 100 kCal per 100g of the beverage). It is particularly preferred that a single serving of the black tea beverage has a total energy content of less than 10 kCal, more preferably less than 5 kCal, most preferably less than 1 kCal. Low calorie beverages preferably comprise one or more non-nutritive sweetener(s).

Regardless of whether the black tea product is a ready-to-drink beverage or a beverage concentrate, it is preferred that the tea product is packaged. Non-limiting examples of suitable packages include bottles, cans, cartons, pouches and sachets. For beverage concentrates, a particularly preferred packaging format is a bag in box (BiB) container. A BiB container typically comprises a bladder (e.g. a plastic bag or a bag made of layers of metalised film and/or plastics) seated inside a box (typically made of corrugated fibreboard). Products packed in this format can be shelf stable at room temperature for several months. When the black tea product is a beverage concentrate, the product is preferably packaged in a bag in box container.

The tea product is preferably sanitised, e.g. by pasteurisation or sterilisation.

Although the black tea product may be manufactured in any convenient manner, the method according to the invention is preferably used. As set out above, the second aspect of the invention relates to a method for preparing a preserved black tea product, the method comprising adding a preservative composition to a black tea product, wherein the black tea product is a ready-to-drink beverage or a beverage concentrate, wherein the black tea product comprises less than 60 ppm linalool, and wherein the preservative composition comprises at least 3 compounds, preferably at least 4 compounds, more preferably at least 5 compounds, selected from: hexanal, E-2-hexenal, E-2-hexenol, E-linalool oxide, methanol and methyl salicylate.

The method is preferably used to prepare the tea product described above, and consequently the preferred technical features described for the tea product also apply *mutatis mutandis* to the method.

Preferably the method comprises an additional step of packaging the black tea product and/or pasteurising or sterilising the black tea product. It is particularly preferred that the method involves a sanitisation step wherein this step comprises heating the black tea product at a temperature of between 60 and 100°C for a time period of 1 to 20 minutes.

As used herein the term "comprising" encompasses the terms "consisting essentially of" and "consisting of". Where the term "comprising" is used, the listed steps or options need not be exhaustive. Except in the examples and comparative experiments, or where otherwise explicitly indicated, all numbers are to be understood as modified by the word "about". As used herein, the indefinite article "a" or "an" and its corresponding definite article "the" means at least one, or one or more, unless specified otherwise.

Unless otherwise specified, numerical ranges expressed in the format "from x to y" are understood to include x and y. In specifying any range of values or amounts, any particular upper value or amount can be associated with any particular lower value or amount. All percentages and ratios contained herein are calculated by weight unless otherwise indicated.

The various features of the present invention referred to in individual sections above apply, as appropriate, to other sections *mutatis mutandis.* Consequently features specified in one section may be combined with features specified in other sections as appropriate. Any section headings are added for convenience only, and are not intended to limit the disclosure in any way.

The following examples are intended to illustrate the invention and are not intended to limit the invention to those examples *per se.*

### Examples

Combinations of aroma molecules were tested for growth inhibition of some common fungal spoilage microorganisms.

A cold-filled, non-preserved peach flavoured tea concentrate was used as the culture medium. This tea concentrate contained black tea extract powder (8.4 g/L), flavour (5.04 g/L), sucrose (444 g/L), citric acid (11.7 g/L), ascorbic acid (1.2 g/L) and water (balance).

The culture medium was spiked, either with an inoculum consisting of a cell suspension of two yeasts (*Candida parapsilosis* and *Zygosaccharomyces bailii*) or with an inoculum consisting of a cell suspension of two moulds (*Paecilomyces variotti* and *Neosartorya fischeri*)*.* In either case, the culture medium was spiked at a level of around 1000 cfu/ml. All samples and controls for each time point were prepared in triplicate.

The samples were incubated at 25°C, and the cultivation period was between 1 and 12 weeks. At each time point, serial dilutions of each sample and control were plated on OMEA plates. The diluent for the serial dilutions was MRD, and a minimum of 3 dilutions were plated out for each sample and control at each time point. The plates were incubated at 25°C for 3 to 5 days, and growth of spoilage microorganisms was determined visually.

### Example 1

Aroma composition stock solutions were prepared. Table 1 summarises the aroma compounds present in four such aroma composition stock solutions (Samples 1 to 4). The concentration of the compounds (where present) in each of the aroma composition stock solutions was as follows: methanol (12900 ppm), E-2-hexenal (6280 ppm), linalool (3170 ppm), Z-3-hexenol (1070 ppm), E-linalool oxide (973 ppm), methyl salicylate (833 ppm), hexanal (509 ppm), E-2-hexenol (492 ppm), acetaldehyde (365 ppm), Z-2-penten-1-ol (344 ppm), 1-penten-3-ol (251 ppm), 1-penten-3-one (107 ppm).

**Table 1: aroma compositions**

| **Compound** | **Sample 1** | **Sample 2** | **Sample 3** | **Sample 4** | **Sample 5** |
|---|---|---|---|---|---|
| Methanol | Y | Y | - | Y | Y |
| E-2-hexenal | Y | Y | - | Y | Y |
| Linalool | Y | - | Y | - | Y |
| Z-3-hexenol | Y | Y | - | - | - |
| E-linalool oxide | Y | Y | - | Y | Y |
| Methyl salicylate | Y | Y | - | Y | Y |
| Hexanal | Y | Y | - | Y | Y |
| E-2-hexenol | Y | Y | - | Y | Y |
| Acetaldehyde | Y | Y | - | - | - |
| Z-2-penten-1-ol | Y | Y | - | - | - |
| 1-penten-3-ol | Y | Y | - | - | - |
| 1-penten-3-one | Y | Y | - | - | - |

For the fungal growth inhibition studies, the appropriate stock solution was diluted in the culture media (i.e. non-preserved peach flavoured tea concentrate) such that the culture media contained 2% (by volume) of the applicable aroma composition. In each study, the appropriate controls were included. These controls were as follows:

| | |
|---|---|
| Control 1: | positive control (i.e. culture medium without any aroma composition spiked with the inoculum); |
| Control 2: | negative control (i.e. unspiked culture medium containing 2% aroma composition); and |
| Control 3: | sterility control (i.e. unspiked culture medium without any aroma composition). |

The results of the fungal growth inhibition studies are summarised in Table 2. The data is from the 1 in 10 serial dilution, and is the mean of the triplicate samples. With regard to the controls, the positive control (Control 1) resulted in >300 cfu/ml at all time points regardless of the inoculum used. Both the negative control (Control 2) and the sterility control (Control 3) resulted in <1 cfu/ml at all time points (data not included in Table 2).

**Table 2: results of fungal growth inhibition study**

| **Sample ID** | **Cultivation period (weeks)** | **Fungal growth (cfu/ml)** | |
|---|---|---|---|
| | | **Mould inoculum** | **Yeast inoculum** |
| **Sample 1** | 1 | <1 | <1 |
| | 2 | <1 | <1 |
| | 3 | <1 | <1 |
| | 4 | >300 | <1 |
| | 7 | >300 | <1 |
| | 12 | >300 | - |
| **Sample 2** | 1 | <1 | <1 |
| | 2 | <1 | 4 |
| | 3 | <1 | 4 |
| | 4 | <1 | 3.3 |
| | 7 | <1 | <1 |
| | 12 | >300 | 4.7 |
| **Sample 3** | 1 | >300 | >300 |
| | 2 | >300 | >300 |
| | 3 | >300 | >300 |
| | 4 | >300 | >300 |
| | 7 | >300 | >300 |
| | 12 | >300 | >300 |
| **Sample 4** | 1 | <1 | <1 |
| | 2 | <1 | <1 |
| | 3 | <1 | <1 |
| | 4 | <1 | <1 |
| | 7 | <1 | <1 |
| | 12 | <1 | <1 |
| **Sample 5** | 1 | <1 | <1 |
| | 2 | <1 | <1 |
| | 3 | <1 | <1 |
| | 4 | <1 | 82.3 |
| | 7 | <1 | 8.3 |
| | 12 | 3 | >300 |
| **Control 1** | 1 | >300 | >300 |
| | 2 | >300 | >300 |
| | 3 | >300 | >300 |
| | 4 | >300 | >300 |
| | 7 | >300 | >300 |
| | 12 | >300 | >300 |

The samples containing all 6 of hexanal, E-2-hexenal, E-2-hexenol, E-linalool oxide, methanol and methyl salicylate (i.e. Samples 1, 2, 4 and 5) all show at least some anti-fungal activity against both yeasts and moulds. Whereas Sample 3 (linalool only) did not show anti-fungal activity against yeasts or moulds.

It is apparent that the samples which contain the 6 listed compounds and linalool (i.e. Samples 1 and 5) are less effective long-term anti-fungal agents, and are most effective for periods of less than a month. In contrast, the samples which the 6 listed compounds without linalool (i.e. Samples 2 and 4) show long-term anti-fungal activity, with Sample 4 showing anti-fungal activity against both yeasts and moulds for at least 12 weeks.

### Example 2

The anti-fungal properties of the 6 compounds in Sample 5 were investigated further. Table 3 summarises 15 further aroma composition stock solutions (Samples A to O) - each containing one or two of these compounds. The concentration of the compounds (where present) in each of the aroma composition stock solutions was as follows: methanol (12900 ppm), E-2-hexenal (6280 ppm), E-linalool oxide (973 ppm), methyl salicylate (833 ppm), hexanal (509 ppm), E-2-hexenol (492 ppm).

**Table 3: aroma compositions (samples A to O)**

| **Sample** | **Compound** | | | | | |
|---|---|---|---|---|---|---|
| | Methanol | Hexanal | E-linalool oxide | Methyl salicylate | E-2-hexenol | E-2-hexenal |
| Sample A | Y | | | | | |
| Sample B | Y | Y | | | | |
| Sample C | Y | | Y | | | |
| Sample D | Y | | | Y | | |
| Sample E | Y | | | | Y | |
| Sample F | Y | | | | | Y |
| Sample G | | Y | | | | |
| Sample H | | Y | Y | | | |
| Sample I | | Y | | Y | | |
| Sample J | | Y | | | Y | |
| Sample K | | Y | | | | Y |
| Sample L | | | Y | | | |
| Sample M | | | Y | Y | | |
| Sample N | | | Y | | Y | |
| Sample O | | | Y | | | Y |

Once again, the appropriate stock solution was diluted in the culture media (i.e. non-preserved peach flavoured tea concentrate) such that the culture media contained 2% (by volume) of the applicable aroma composition. A yeast inoculum was used for this study. The appropriate controls (positive, negative and sterility controls) were included. The positive control resulted in >300 cfu/ml at all time points, whilst both the negative control and the sterility control resulted in <1 cfu/ml at all time points.

All of the samples containing only a single compound (i.e. Samples A, G and L) resulted in >300 cfu/ml - even after 1 week. Of the samples containing pairs of compounds, only Samples E, I, J and K showed any appreciable anti-fungal activity after 1 week. None of the samples containing pairs of compounds showed significant anti-fungal activity after 2 weeks. Therefore, it was hypothesised that anti-fungal activity required at least 3 of the compounds to be present.

### Example 3

The anti-fungal properties of further combinations of the compounds in Sample 5 were investigated. Table 4 summarises 3 further aroma composition stock solutions (Samples 6 to 8) - each containing 3 of these compounds. The concentration of the compounds (where present) in each of the aroma composition stock solutions was as follows: E-2-hexenal (628000 ppm), E-linalool oxide (973 ppm), methyl salicylate (833 ppm), hexanal (509 ppm).

**Table 4: aroma compositions (samples 6 to 8)**

| **Sample** | **Compound** | | | |
|---|---|---|---|---|
| | Hexanal | E-linalool oxide | Methyl salicylate | E-2-hexenal |
| Sample 6 | Y | | Y | Y |
| Sample 7 | | Y | Y | Y |
| Sample 8 | Y | | Y | Y |

Once again, the appropriate stock solution was diluted in the culture media (i.e. non-preserved peach flavoured tea concentrate) such that the culture media contained 2% (by volume) of the applicable aroma composition. The culture medium was spiked, either with yeast inoculum or a mould inoculum. The appropriate controls (positive, negative and sterility controls) were included. The positive control resulted in >300 cfu/ml at all time points regardless of the inoculum used, whilst both the negative control and the sterility control resulted in <10 cfu/ml at all time points.

All of the Samples 6 to 8 showed anti-fungal activity after 6 weeks (i.e. <10 cfu/ml). This confirmed the hypothesis that anti-fungal activity required at least 3 of the compounds to be present.

## Claims

1. Black tea product comprising a preservative composition, wherein the black tea product is a ready-to-drink beverage or a beverage concentrate, wherein the black tea product comprises less than 60 ppm linalool, and wherein the preservative composition comprises at least 3 compounds selected from: hexanal, E-2-hexenal, E-2-hexenol, E-linalool oxide, methanol and methyl salicylate.

2. Black tea product as claimed in claim 1 wherein the preservative composition comprises E-2-hexenal and at least 2 compounds selected from: hexanal, E-2-hexenol, E-linalool oxide, methanol and methyl salicylate.

3. Black tea product as claimed in claim 1 wherein the preservative composition comprises at least 4 compounds selected from: hexanal, E-2-hexenal, E-2-hexenol, E-linalool oxide, methanol and methyl salicylate.

4. Black tea product as claimed in any one of claims 1 to 3 wherein the total concentration of the preservative composition in the black tea product is 10 ppm to 10000 ppm, preferably 35 ppm to 5000 ppm.

5. Black tea product as claimed in any one of claims 1 to 4 wherein the black tea product comprises 0.05% to 3% by weight of black tea solids.

6. Black tea product as claimed in any one of claims 1 to 5 wherein the black tea product has a pH of 2 to 6, preferably 2 to 4.

7. Black tea product as claimed in any one of claims 1 to 6 wherein the black tea product comprises less than 200 ppm sorbates, preferably less than 100 ppm sorbates.

8. Black tea product as claimed in any one of claims 1 to 7 wherein the black tea product comprises less than 100 ppm benzoates, preferably less than 50 ppm benzoates.

9. Black tea product as claimed in any one of claims 1 to 8 wherein the black tea product additionally comprises natural or synthetic fruit flavour and/or natural or synthetic herb flavours.

10. Black tea product as claimed in any one of claims 1 to 9 wherein the product is a beverage concentrate comprising 25 wt.% to 75 wt.% water.

11. Black tea product as claimed in claim 10 when the product is packaged in a bag in box container.

12. Method for preparing a preserved black tea product, the method comprising adding a preservative composition to a black tea product, wherein the black tea product is a ready-to-drink beverage or a beverage concentrate, wherein the black tea product comprises less than 60 ppm linalool, and wherein the preservative composition comprises at least 3 compounds selected from: hexanal, E-2-hexenal, E-2-hexenol, E-linalool oxide, methanol and methyl salicylate.

13. Method as claimed in claim 12 wherein the method comprises an additional step of packaging the preserved black tea product.

14. Method as claimed in claim 12 or claim 13 wherein the method comprises an additional step of pasteurising or sterilising the preserved black tea product.

## Patentansprüche

1. Schwarzteeprodukt, umfassend eine Konservierungszusammensetzung, wobei das Schwarzteeprodukt ein trinkfertiges Getränk oder ein Getränkekonzentrat ist, wobei das Schwarzteeprodukt weniger als 60 ppm Linalool umfasst und wobei die Konservierungszusammensetzung mindestens 3 Verbindungen, ausgewählt aus Hexanal, E-2-Hexenal, E-2-Hexenol, E-Linalooloxid, Methanol und Methylsalicylat, umfasst.

2. Schwarzteeprodukt, wie im Anspruch 1 beansprucht, wobei die Konservierungszusammensetzung E-2-Hexenal und mindestens 2 Verbindungen, ausgewählt aus Hexanal, E-2-Hexenol, E-Linalooloxid, Methanol und Methylsalicylat, umfasst.

3. Schwarzteeprodukt, wie im Anspruch 1 beansprucht, wobei die Konservierungszusammensetzung mindestens 4 Verbindungen, ausgewählt aus Hexanal, E-2-He-xenal, E-2-Hexenol, E-Linalooloxid, Methanol und Methylsalicylat, umfasst.

4. Schwarzteeprodukt, wie in irgendeinem der Ansprüche 1 bis 3 beansprucht, wobei die Gesamtkonzentration der Konservierungszusammensetzung in dem Schwarzteeprodukt 10 ppm bis 10000 ppm, vorzugsweise 35 ppm bis 5000 ppm, beträgt.

5. Schwarzteeprodukt, wie in irgendeinem der Ansprüche 1 bis 4 beansprucht, wobei das Schwarzteeprodukt 0,05 bis 3 Gewichts-% Schwarzteefeststoffe umfasst.

6. Schwarzteeprodukt, wie in irgendeinem der Ansprüche 1 bis 5 beansprucht, wobei das Schwarzteeprodukt einen pH-Wert von 2 bis 6, vorzugsweise von 2 bis 4, aufweist.

7. Schwarzteeprodukt, wie in irgendeinem der Ansprüche 1 bis 6 beansprucht, wobei das Schwarzteeprodukt weniger als 200 ppm Sorbate, vorzugsweise weniger als 100 ppm Sorbate, umfasst.

8. Schwarzteeprodukt, wie in irgendeinem der Ansprüche 1 bis 7 beansprucht, wobei das Schwarzteeprodukt weniger als 100 ppm Benzoate, vorzugsweise weniger als 50 ppm Benzoate, umfasst.

9. Schwarzteeprodukt, wie in irgendeinem der Ansprüche 1 bis 8 beansprucht, wobei das Schwarzteeprodukt zusätzlich natürliches oder synthetisches Fruchtaroma und/oder natürliche oder synthetische Kräuteraromen umfasst.

10. Schwarzteeprodukt, wie in irgendeinem der Ansprüche 1 bis 9 beansprucht, wobei das Produkt ein Getränkekonzentrat ist, das 25 bis 75 Gew.-% Wasser umfasst.

11. Schwarzteeprodukt, wie im Anspruch 10 beansprucht, wobei das Produkt in einem Bag-in-Box-Behälter verpackt ist.

12. Verfahren zur Herstellung eines konservierten Schwarzteeprodukts, wobei das Verfahren das Zugeben einer Konservierungszusammensetzung zu einem Schwarzteeprodukt umfasst, wobei das Schwarzteeprodukt ein trinkfertiges Getränk oder ein Getränkekonzentrat ist, wobei das Schwarzteeprodukt weniger als 60 ppm Linalool umfasst und wobei die Konservierungszusammensetzung mindestens 3 Verbindungen, ausgewählt aus Hexanal, E-2-Hexenal, E-2-Hexenol, E-Linalooloxid, Methanol und Methylsalicylat, umfasst.

13. Verfahren, wie im Anspruch 12 beansprucht, wobei das Verfahren einen zusätzlichen Schritt des Verpackens des konservierten Schwarzteeprodukts umfasst.

14. Verfahren, wie im Anspruch 12 oder Anspruch 13 beansprucht, wobei das Verfahren einen zusätzlichen Schritt des Pasteurisierens oder Sterilisierens des konservierten Schwarzteeprodukts umfasst.

## Revendications

1. Produit de thé noir comprenant une composition de conservation, dans lequel le produit de thé noir est une boisson prête à être bue ou un concentré de boisson, dans lequel le produit de thé noir comprend moins de 60 ppm de linalool, et dans lequel la composition de conservation comprend au moins 3 composés choisis parmi : hexanal, E-2-hexénal, E-2-hexénol, oxyde de E-linalool, méthanol et salicylate de méthyle.

2. Produit de thé noir selon la revendication 1, dans lequel la composition de conservation comprend E-2-hexénal et au moins 2 composés choisis parmi : hexanal, E-2-hexénol, oxyde de E-linalool, méthanol et salicylate de méthyle.

3. Produit de thé noir selon la revendication 1, dans lequel la composition de conservation comprend au moins 4 composés choisis parmi : hexanal, E-2-hexénal, E-2-hexénol, oxyde de E-linalool, méthanol et salicylate de méthyle.

4. Produit de thé noir selon l'une quelconque des revendications 1 à 3, dans lequel la concentration totale de la composition de conservation dans le produit de thé noir est de 10 ppm à 10 000 ppm, de préférence de 35 ppm à 5 000 ppm.

5. Produit de thé noir selon l'une quelconque des revendications 1 à 4, dans lequel le produit de thé noir comprend de 0,05 % à 3 % en masse de solides de thé noir.

6. Produit de thé noir selon l'une quelconque des revendications 1 à 5, dans lequel le produit de thé noir présente un pH de 2 à 6, de préférence de 2 à 4.

7. Produit de thé noir selon l'une quelconque des revendications 1 à 6, dans lequel le produit de thé noir comprend moins de 200 ppm de sorbates, de préférence moins de 100 ppm de sorbates.

8. Produit de thé noir selon l'une quelconque des revendications 1 à 7, dans lequel le produit de thé noir comprend moins de 100 ppm de benzoates, de préférence moins de 50 ppm de benzoates.

9. Produit de thé noir selon l'une quelconque des revendications 1 à 8, dans lequel le produit de thé noir comprend de plus des arômes de fruits naturels ou synthétiques et/ou des arômes d'herbes naturels ou synthétiques.

10. Produit de thé noir selon l'une quelconque des revendications 1 à 9, dans lequel le produit est un concentré de boisson comprenant de 25 % en masse à 75 % en masse d'eau.

11. Produit de thé noir selon la revendication 10, dans lequel le produit est emballé dans un sac dans un récipient de boîte.

12. Procédé pour la préparation d'un produit de thé noir conservé, le procédé comprenant l'addition d'une composition de conservation à un produit de thé noir, dans lequel le produit de thé noir est une boisson prête à être bue ou un concentré de boisson, dans lequel le produit de thé noir comprend moins de 60 ppm de linalool, et dans lequel la composition de conservation comprend au moins 3 composés choisis parmi : hexanal, E-2-hexénal, E-2-hexénol, oxyde de E-linalool, méthanol et salicylate de méthyle.

13. Procédé selon la revendication 12, dans lequel le procédé comprend une étape supplémentaire d'emballage du produit de thé noir conservé.

14. Procédé selon la revendication 12 ou revendication 13, dans lequel le procédé comprend une étape supplémentaire de pasteurisation ou stérilisation du produit de thé noir conservé.
